# EUROPÄISCHE PATENTANMELDUNG

(11) **EP 0 893 302 A2**
(43) Veröffentlichungstag der Anmeldung: **27.01.1999**
(21) Anmeldenummer: 98112120.5
(22) Anmeldetag: 01.07.1998
(51) Int. Cl.: B60P 1/00

(54) **Ausziehbarer Ladeboden für ein Fahrzeug**

(30) Priorität: 22.07.1997 DE 19731324
(71) Anmelder: Bayerische Motoren Werke Aktiengesellschaft, 80788 München (DE)
(72) Erfinder: Klaus, Wolfgang, 85416 Langenbach (DE)

(57) **Zusammenfassung**

Es wird ein ausziehbarer Ladeboden (3) für ein Kraftfahrzeug beschrieben, der über Laufrollen (4) entlang von Stützschienen (6) verlagerbar ist.

Mit dem Fahrzeugkörper (1) sind die Stützschienen (6) so verbunden, daß sie in der Höhe verstellbar sind. Die Höhenverstellung erfolgt über zwei Parallelogramm-Lenker (7, 7'), unter Zuhilfenahme eines Verstellzylinders (9).

## Beschreibung

Die Erfindung bezieht sich auf einen ausziehbaren Ladeboden für ein Fahrzeug nach dem Oberbegriff des Patentanspruches 1.

### [Stand der Technik]

Ausziehbare Ladeböden für Fahrzeuge, insbesondere nach hinten ausziehbare Ladeböden sind bei Heckklappen-Fahrzeugen mehrfach bekannt (US 5,064,335 A oder DE 23 02 972 A). Der Ladeboden kann als durchgehende Platte, aber auch als Rahmen oder Rost mit aufgelegtem stabilem Drahtgeflecht ausgebildet sein. Zum leichtgängigen Aus- und Einschieben des Ladebodens sind zumeist Schienenführungen vorgesehen, die eine fest mit dem Fahrzeugaufbau verbundene Stützschiene und eine am Ladeboden vorgesehene, mit Laufrollen ausgerüstete Laufschiene umfassen. In der Regel sind derart ausgebildete Führungsschienen an den beiden seitlichen Rändern des Ladebodens angeordnet.

Die bekannten Ladeböden, die bei Fahrzeugen mit Heckklappe oder auch mit Kofferraumklappe verwendbar sind, haben noch den Nachteil eines großen Bauraumbedarfes, so daß Laderaumhohe bzw. Kofferraumvolumen verlorengeht.

### [Aufgabe der Erfindung]

Der Erfindung liegt die Aufgabe zugrunde, einen ausziehbaren Ladeboden für Fahrzeuge der eingangs erwähnten Art zu schaffen, der nicht nur ein einfaches Beladen des Fahrzeugs gestattet, sondern auch möglichst viel Ladevolumen ermöglicht.

Diese Aufgabe wird erfindungsgemäß durch die im Patentanspruch 1 angegebenen Merkmale gelöst.

Weitere vorteilhafte Einzelheiten der Erfindung sind Gegenstand der Unteransprüche.

Dadurch, daß die Stützschienen, über die der Fahrzeugboden horizontal verlagert werden kann, bei eingeschobenem Ladeboden auch vertikal verlagerbar sind, kann der Ladeboden aus einem Niveau, in dem er zum Herausziehen über dem Niveau der Ladekante liegt, abgesenkt werden. Dadurch wird sonst nicht nutzbares Kofferraumvolumen oder auch - bei Heckklappenfahrzeugen - Ladevolumen gewonnen. Im eingefahrenen Zustand ist zweckmäßig der Ladeboden und die Ladekante auf gleichem Höhenniveau. Bei unten angeschlagenen Heckklappen ist trotzdem das Beladen erleichtert. Auch kann die Sicherung des Ladeguts auf dem Ladeboden bequem vorgenommen werden. Nach dem Einfahren und Festlegen des Ladebodens in seiner abgesenkten Position ist das Ladegut sicher verstaut.

Weitere Einzelheiten und Vorteile der Erfindung sind im folgenden anhand eines in der Zeichnung dargestellten Ausführungsbeispiels erläutert. Es zeigt

### [Beispiel]

- Fig. 1: einen schematisierten vertikalen Längsschnitt durch den Heckbereich eines Kraftfahrzeugs in dem Bereich der hinteren Ladekante;
- Fig. 2: eine der Fig. 1 entsprechende Darstellung, jedoch mit angehobenem Ladeboden;
- Fig. 3: eine der Fig. 2 entsprechende Darstellung, jedoch mit ausgeschobenem Ladeboden;
- Fig. 4: eine Detaildarstellung in dem Bereich IV in Fig. 3 und
- Fig. 5: eine weitere Detaildarstellung in dem Bereich V der Fig. 3.

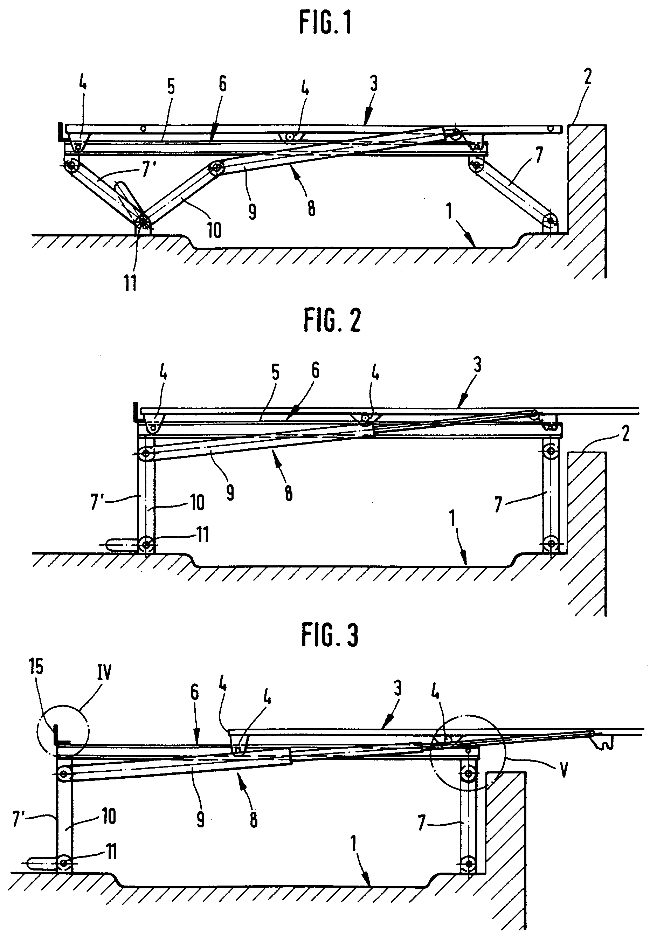

In Fig. 1 der Zeichnung ist der Fahrzeugkörper 1 lediglich angedeutet, und zwar in einem Bereich, der vor der hinteren Ladekante 2 liegt. Bei dem dargestellten Ausführungsbeispiel ist ein aus einer Platte gefertigter Ladeboden 3 vorgesehen, der an seinen beiden seitlichen Rändern wenigstens zwei Laufrollen 4 aufweist. Die Laufrollen 4 sind dabei so angeordnet, daß die (in der Zeichnung) linken Laufrollen 4 sich von unten an einem horizontalen Schenkel 5 von Stützschienen 6 abstützen, während die (in der Zeichnung) rechten Laufrollen sich auf dem erwähnten Schenkel 5 von oben abstützen.

Es kann sich als zweckmäßig erweisen, die Laufrollen 4 an einer eigenen (nicht dargestellten) Laufschiene zu lagern, die dann ihrerseits mit dem Ladeboden 3 fest verbunden ist.

Die Stützschienen 6 sind in der Höhe relativ zum Fahrzeugkörper 1 verstellbar. Der Ladeboden 3 ist dabei aus einer zur unteren Ladekante 2 etwa bündigen Lage (Fig. 1) in eine Lage oberhalb der Ladekante 2 anhebbar (Fig. 2).

Wie man erkennt, sind die Stützschienen 6 durch Parallelogramm-Lenker 7 bzw. 7' in der Höhe verstellbar, deren oberes Ende mit den Stützschienen 6 und deren anderes Ende mit dem Fahrzeugkörper 1 jeweils gelenkig verbunden ist. In der abgesenkten, in Fig. 1 wiedergegebenen Ruhestellung des Ladebodens 3 sind die oberen Gelenke der Parallelogramm-Lenker 7 bzw. 7' von der Ladekante 2 nach vorne etwas weggeschwenkt. Die Stützschienen 6 können zur Bildung eines Stützrahmens untereinander fest verbunden sein.

Die Stützschienen 6 könnten manuell in der Höhe verlagerbar sein, bei dem bevorzugten dargestellten Ausführungsbeispiel sind sie jedoch durch einen motorischen Antrieb 8 anhebbar und absenkbar. Bei dem Antrieb 8 handelt es sich um einen Linearantrieb. Er ist zweckmäßig durch wenigstens einen Verstellzylinder 9 gebildet, der einerseits am Ladeboden 3 angreift und sich andererseits am Fahrzeugkörper 1 abstützt. Der Verstellzylinder 9 kann hydraulisch oder auch pneumatisch betätigt sein, ggf. auch ein mehrfach teleskopisch ausfahrbarer Zylinder sein.

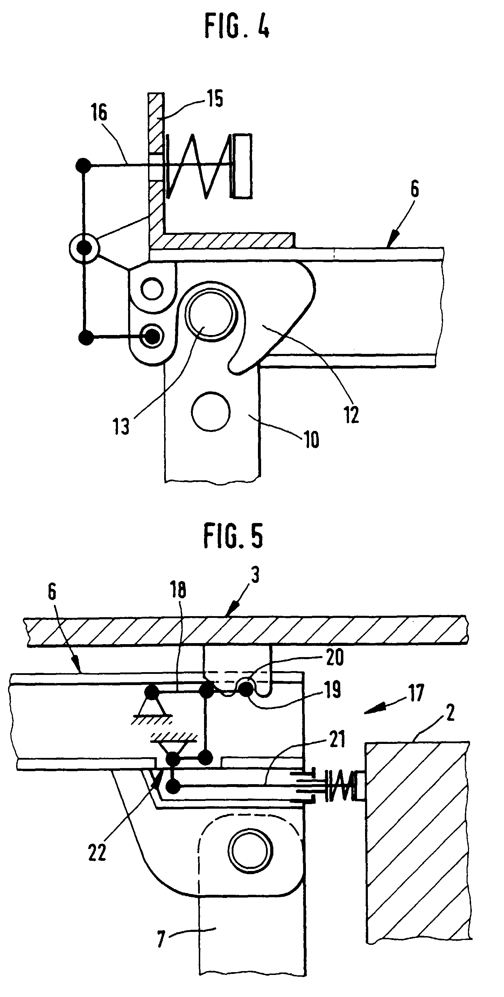

Bei dem dargestellten Ausführungsbeispiel greift der Verstellzylinder 9 an einem Ende eines im wesentlichen L-förmigen oder winkelförmigen Stützlenkers 10 an, der im Scheitelbereich um eine Querachse 11 schwenkbar am Fahrzeugkörper 1 gelagert ist. Der Stützlenker 10 stützt sich bei angehobenem Ladeboden 3 mit dem anderen Schenkel am Fahrzeugkörper 1 ab. Wird der Ladeboden 3 aus der in Fig. 3 gezeigten Lage eingezogen in die in Fig. 1 gezeigte Ruhestellung, so schwenkt der Stützlenker 10 am Ende dieses Bewegungsvorgangs in die in Fig. 1 ersichtliche Lage, in der er sich mit dem freien Schenkel nicht mehr am Fahrzeugkörper 1 abstützt. Der mit dem Verstellzylinder 9 verbundene Schenkel des Stützlenkers 10 ist mit den Stützschienen 6 verriegelbar. Hierzu ist in der aus Fig. 4 ersichtlichen Weise am inneren Ende der Stützschiene 6 eine federbelastete Klinke 12 gelagert, in deren Halteöffnung ein vom Stützlenker 10 seitlich abstehender Haltebolzen 13 eintreten kann. Trifft die Hinterkante 14 des Ladebodens 3 beim Einfahren gegen einen inneren Endanschlag 15 der Stützschienen 6, so wird dabei ein gegen Federkraft verschiebbarer Stößel 16 betätigt, der über einen Zwischenhebel die Sperrklinke 12 freigibt und damit die Verriegelung des Stützlenkers 10 mit den Stützschienen aufhebt.

Es ist ferner eine Koppeleinrichtung 17 vorgesehen, mit der der Ladeboden 3 an den Stützschienen 6 festlegbar ist. Beim Anheben und Annähern des Ladebodens 3 in den Bereich der Ladekante 2 ist die Koppeleinrichtung selbsttätig lösbar. Hierzu ist gemäß Fig. 5 am äußeren Ende wenigstens einer der Stützschienen 6 ein um eine Querachse schwenkbarer Bügel 18 vorgesehen, der mit einem Querbolzen 19 in eine an der Unterseite des Ladebodens 3 ausgebildete entsprechende Ausnehmung 20 eintreten kann. Durch einen federbelasteten Stößel 21, der gegen eine innere Wandung 22 im Bereich der Ladekante 2 beim Anheben des Ladebodens 3 trifft, wird über ein Umlenkgestänge 22 der Querbolzen 19 aus der ihm zugeordneten Ausnehmung 20 heraus verlagert und der Ladeboden 3 kann danach horizontal relativ zu den Stützschienen 6 nach außen verschoben werden. Beim Zurückziehen des Ladebodens 3 in die Fahrzeugkarosserie rastet der Querbolzen 19 selbsttätig in die Ausnehmung 20 ein.

## Patentansprüche

1. Ausziehbarer Ladeboden (3) für ein Fahrzeug, insbesondere für ein mit einer Heckklappe versehenes Kraftfahrzeug, mit mehreren am Ladeboden (3) befestigten Laufrollen (4), die jeweils entlang von in Ausziehrichtung verlaufenden Stützschienen (6) verlagerbar sind, die mit dem Fahrzeugkörper (1) verbunden sind, dadurch gekennzeichnet, daß die Stützschienen (6) relativ zum Fahrzeugkörper (1) in der Höhe verstellbar sind.

2. Ladeboden nach Anspruch 1, dadurch gekennzeichnet, daß die Laufrollen an Laufschienen gelagert sind, die am Ladeboden befestigt sind.

3. Ladeboden nach Aspruch 1, dadurch gekennzeichnet, daß der Ladeboden (3) aus einer zur unteren Ladekante (2) in etwa bündigen Lage in eine Lage oberhalb der Ladekante (2) anhebbar ist.

4. Ladeboden nach Anspruch 1, dadurch gekennzeichnet, daß die Stützschienen (6) durch Parallelogramm-Lenker (7, 7') verstellbar sind, deren eines Ende mit den Sützschienen (6) und deren anderes Ende mit dem Fahrzeugkörper (1) jeweils gelenkig verbunden ist.

5. Ladeboden nach Anspruch 1, dadurch gekennzeichnet, daß die Stützschienen (6) zur Bildung eines Stützrahmens untereinander verbunden sind.

6. Ladeboden nach Anspruch 1, dadurch gekennzeichnet, daß die Stützschienen durch einen motorischen Antrieb (8) anhebbar und absenkbar sind.

7. Ladeboden nach Anspruch 6, dadurch gekennzeichnet, daß als Antrieb (8) ein Linearantrieb vorgesehen ist.

8. Ladeboden nach Anspruch 7, dadurch gekennzeichnet, daß der Linearantrieb durch wenigstens einen Verstellzylinder (9) gebildet ist, der einerseits am Ladeboden (3) angreift und sich andererseits am Fahrzeugkörper (1) abstützt.

9. Ladeboden nach Anspruch 7, dadurch gekennzeichnet, daß der Verstellzylinder (9) sich an einem Schenkel eines im wesentlichen L-förmigen Stützlenkers (10) abstützt, der im Scheitelbereich um eine Querachse (11) schwenkbar am Fahrzeugkörper (1) gelagert ist und sich ferner bei angehobenem Ladeboden (3) mit dem anderen Schenkel am Fahrzeugkörper (1) abstützt.

10. Ladeboden nach Anspruch 9, dadurch gekennzeichnet, daß der mit dem Verstellzylinder (9) verbundene Schenkel des Stützlenkers (10) mit den Stützschienen (6) verriegelbar ist.

11. Ladeboden nach Anspruch 6, dadurch gekennzeichnet, daß die Verriegelung über eine federbelastete Klinke (12) erfolgt, die beim Einfahren des Ladebodens (3) gegen einen Endanschlag (15) der Stützschienen (6) entriegelt wird.

12. Ladeboden nach Anspruch 14, dadurch gekennzeichnet, daß eine Koppeleinrichtung (17) vorgesehen ist, mit der der Ladeboden (3) an den Stützschienen (6) festlegbar ist.

13. Ladeboden nach Anspruch 12, dadurch gekennzeichnet, daß die Koppeleinrichtung (17) beim Anheben und Annähern des Ladebodens (3) in den Bereich der Ladekante (2) selbsttätig lösbar ist.
